# EUROPEAN PATENT SPECIFICATION

(11) **EP 1 110 854 B1**
(45) Date of publication and mention of the grant of the patent: **10.01.2007**
(21) Application number: 00125221.2
(22) Date of filing: 22.11.2000
(51) Int. Cl.: B62D 65/00

(54) **Robot system synchronized with conveyor speed and car seat providing method using such a robot system**
Robotersystem synchronisiert mit der Förderbandgeschwindigkeit und Bereitstellung von Fahrzeugsitzen mit so einem Robotersystem
Système de robot avec synchronisation avec la vitesse du convoyeur et apportement de sieges, utilisant un tel système de robot

(30) Priority: 23.12.1999 KR 9960993
(43) Date of publication of application: 27.06.2001
(73) Proprietor: HYUNDAI MOTOR COMPANY, Jongro-ku, Seoul (KR)
(72) Inventor: Lim, Tae-Won, Buk-ku, Ulsan-city (KR); Kwon, Woo-Chul, Nam-ku, Ulsan-city (KR)
(74) Representative: HOFFMANN EITLE

(56) References cited:
- US-A- 4 589 184
- US-A- 4 669 168
- US-A- 5 380 978
- PATENT ABSTRACTS OF JAPAN vol. 010, no. 346 (M-537), 21 November 1986 (1986-11-21) & JP 61 146439 A (HONDA MOTOR CO LTD;OTHERS: 01), 4 July 1986 (1986-07-04)

## Description

### CROSS-REFERENCES TO RELATED APPLICATIONS

This application is based on Korean patent application No. 99-60993 filed on December 23, 1999, the disclosure of which is incorporated herein by reference.

### BACKGROUND OF THE INVENTION

### (a) Field of the Invention

The present invention relates to a robot system and car seat providing method and, more particularly, to a robot system wherein the feed speed of a robot carrier is synchronized with the feed speed of a conveyor which carries a car body.

### (b) Description of the Related Art

Generally, In a car fitting-out yard where production activities are in accordance with a continuous conveyor system, heavy accessories like car seats are placed into the car body by the worker's manual activity.

This manual car seat placing work is carried out when the car body is flowing through the main conveyor. When a car seat is provided by a seat conveyor which is installed on both sides of the main conveyor, workers grip it and place it into the moving car body.

Since the car seat placing activity is completely carried out by worker's manual activity, the surface of the car body may be scratched or dented. Moreover, workers are likely to avoid working with the heavy accessories because of the possibility of industrial accidents.

Accordingly, there are attempts to build an exclusive machine system for placing heavy accessories or to install robots on shuttle units. However, the exclusive machine system has some problems in that it is difficult to provide a flexible response to changes of the production method, and the product output time is delayed by simulating the system for obtaining good product quality when the car model is changed. Moreover, a shuttle-based robot system demands a high installing cost for each shuttle unit and any maintenance operation on the shuttle units when they are not in operation causes delays in production.

United States Patent 4, 669, 168 discloses synchronizing the movement on the parallel path of an assembly robot on a car production line. The assembly robot is provided on a base which is moveable within a movement range in synchronism with a car body. The robot is controlled to position the car component part into or onto the car while the robot is synchronously moving with the car body. Video mages are used to control positioning and attachment of the automobile component.

### SUMMARY OF THE INVENTION

The present invention has been made in an effort to solve the above problems.

It is an object of the present invention to provide a robot system which is synchronizedly operated in a dynamic state according to a conveyor feed speed in order to decrease a period of production and an installing cost, and a car seat providing method using the synchronous robot system.

To achieve the above object, the present invention provides a robot system operating in accordance with the conveyor speed. The robot system comprises a main conveyor means for carrying a car body at a constant speed, a robot assembly for placing a car seat into said car body according to teaching programs, a robot carrier for moving the working position of said robot assembly, and a main control unit characterized by the ability to detect the feed speeds of said main conveyor means and said robot carrier and synchronize the feed speed of said robot carrier with the feed speed of said main conveyor means.

The main conveyor means comprises a slat conveyor carrying car seats, an actuating shaft rotating said slat conveyor; and a conveyor encoder detecting a pulse signal generated from the rotation of said actuating shaft and sending said pulse signal to said main control unit in order to control said feed speed of said robot carrier.

The robot assembly comprises an industrial robot for gripping said car seat and placing it into said car body, and a robot controller for controlling the operation of said robot according to teaching programs made in advance.

The robot assembly further comprises a CCD camera for monitoring the sensing part of said car seat while being mounted on said robot carrier, and a vision controller for sending the deviation data monitored from said CCD camera to said robot controller in order to revise the teaching programs when the position of the car seat is slightly deviated from shaking, vibrating, tossing etc.

The robot carrier comprises a synchronous carriage for mounting thereon and carrying the industrial robot, a servo motor for actuating said synchronous carriage, a servo motor controller for controlling said servo motor to actuate said synchronous carriage at the same speed with said main conveyor means, where a speed signal is inputted from said main controller, and a servo motor encoder detecting the dimension and speed of said servo motor and sending the detected data to said servo motor controller.

The synchronous carriage has a lifter for separating said car body from said main conveyor means in order to prevent said car body from vibrating due to the speed transition of the conveyor during said industrial robot operation.

A car seat providing method using the synchronous robot system includes the first step of sensing the entry of car body and detecting the feed speed of the main conveyor means. Then, the synchronous carriage is carried at the speed which is synchronized with the feed speed of the main conveyor means. Then, the lifter lifts the car body from the main conveyor means and the CCD camera sends the deviation data of the lifted car body to the robot controller. Then, the robot controller revises the teaching program for operating the industrial robot with respect to the deviation data and the robot places the car seat into the car body according to the revised teaching program. Finally, the lifter lowers the car body and the synchronous carriage returns to the initial position.

### BRIEF DESCRIPTION OF THE DRAWINGS

These and other features, aspects, and advantages of the present invention will become better understood with regard to the following description, appended claims, and accompanying drawings where:
FIG. 1 is a basic block diagram illustrating a robot system according to the present invention;
FIG. 2 is a schematic diagram illustrating a robot system according to the present invention;
FIG. 3 is a schematic diagram illustrating a vision sensing part of a robot system according to the present invention;.
FIG. 4 is a flowchart illustrating a car seat providing method using the robot system according to the present invention;

### DETAILED DESCRIPTION OF THE PREFERRED EMBODIMENTS

A detailed description of a preferred embodiment of the present invention is made as follows with reference to the appended drawings.

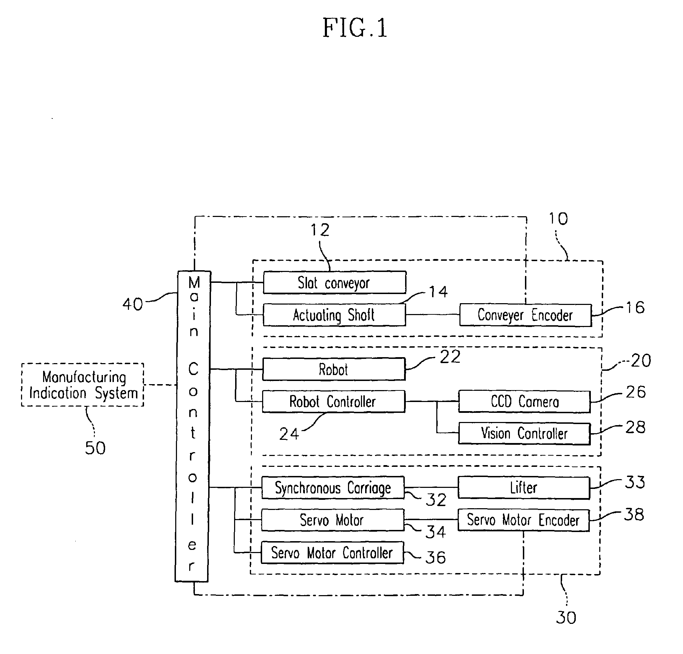

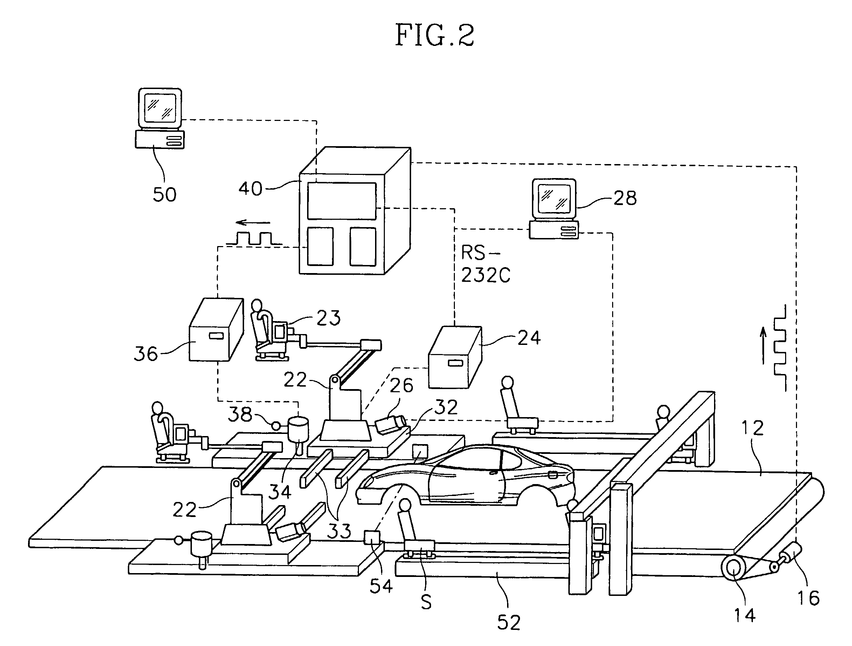

FIG. 1 and FIG. 2 show a robot system according to the present invention. The inventive robot system is an automatic system for providing car seats into a car body. The robot system includes a main conveyor means 10 for carrying a car body, a robot assembly 20 for placing the car seat into the car body, a robot carrier 30 for moving the robot assembly, and a main control unit 40 for controlling the speed of robot carrier 30.

The main conveyor means 10 is designed to carry the car body toward the robot assembly 20 at a constant speed and take away the finished car body. It is preferred that the main conveyor means 10 comprise a slat conveyor 12, an actuating shaft 14, and a conveyor encoder 16. The slat conveyor 12 carries the car body thereon. The actuating shaft 14 rotates the slat conveyor 12 at constant speed to proceed the car body toward the robot assembly 20. The conveyor encoder 16 detects a pulse signal which is generated from the rotation of said actuating shaft 14 in order to send it to the main control unit 40. As a result, the main control unit 40 syncoronizes the speed of the robot carrier 30 with the speed of the main conveyor unit 10 by referring to the pulse signal.

The robot assembly 20 is designed to place the car seat into the car body automatically according to a teaching program. The robot assembly 20 comprises an industrial robot 22, and a robot controller 24. Preferably, the industrial robot 22 is a 6-axis multi-armed robot where the rotation of each arm is precisely controlled by a servo motor. A gripper 23 for the car seat is installed to the sixth arm of the robot 22. The robot controller 24 varies from between producing companies, but it is preferable to include a teaching program in its main memory and to have a communication device for exchanging data and signal with the main control unit 40.

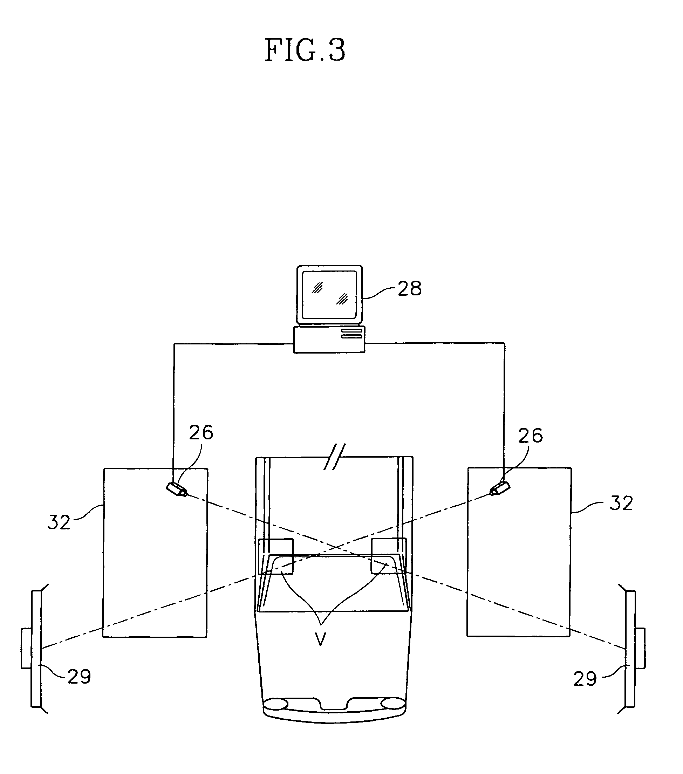

As shown in Fig. 3, The robot assembly 20 can be designed to include CCD cameras 26, and a vision controller in order to revise the teaching program for the robot 22 when the position of the car seat is slightly deviated from shaking, vibrating, tossing, etc. The CCD cameras 26 monitor the predetermined sensing parts of the car body. The CCD cameras 26 are mounted on the robot carrier 30. The vision controller 28 sends the deviation data, which can be obtained from the CCD cameras 26, to the robot controller 24.

It is preferable to choose the coated surface of the upper rounded part of a windshield glass as the sensing part for revising the teaching program, since the mirror effect by the reflection of the camera beam, which decreases the sensitivity, can be minimized. Additionally, It can be considered to arrange an illuminating device 29 in front of the CCD cameras 26 to increase the sensitivity of the CCD cameras 26.

The robot carrier 30 depicted in Fig. 1 and Fig. 2 is designed to carry the robot 22 synchronizing with the speed of the main conveyor unit 10. It is preferred that the robot carrier 30 comprise a synchronous carriage 32, a servo motor 34, a servo motor controller 36, and a servo motor encoder 38. The synchronous carriage 32 mounts the industrial robot 22 thereon and carries the robot 22 at the synchronized speed. The servo motor 34 actuates the synchronous carriage 32. The servo motor controller 36 controls the servo motor 34 to actuate the synchronous carriage 32 at the same speed as the main conveyor means 10 via an input signal from the main control unit 40. The servo motor encoder 38 detects the dimension and speed of the servo motor 34 and sends the detected data to the servo motor controller 36.

When a car seat is placed in the car body according to the present robot system, the car body may vibrate due to minute speed deviations of the slat conveyor 12 during the industrial robot 22 operation. To solve this problem, it is preferred that a lifter 33, which is projected from the synchronous carriage 32, should lift the car body from the slat conveyor 12 to some height.

The main control unit 40 controls the main conveyor unit 10, the robot assembly 20, and the robot carrier 30. The main control unit 40 receives the operating signal from the manufacturing indication system 50 which is embodied by the Computer Integrated Manufacturing (CIM) system.

When the main control unit 40 receives the operating signal, the main control unit 40 starts synchronizing the carrying speed of the industrial robot 22 with the speed of the main conveyor unit 10. Firstly, the main control unit 40 detects a conveyor feed speed via the conveyor encoder 16 of the main conveyor unit 10 and a robot feed speed via the servo motor encoder 38 of the robot carrier 30. Then, it resets the speed of the synchronous carriage 32 in consequence of the comparison with the two feed speeds, and sends the speed signal to the servo motor controller 36. Finally, the servo motor controller 36 adjusts the speed of the synchronous carriage 32 to the reset speed. Therefore, the feed speed of the robot carrier 30 is synchronized with that of the main conveyor unit 10.

In this embodiment, the robot assembly 20 and the robot carrier 30 can be equipped as a pair which are installed on each side of the slat conveyor 12.

The reference numeral 52 indicates a seat conveyor, and the reference numeral number 54 indicates a beam sensor.

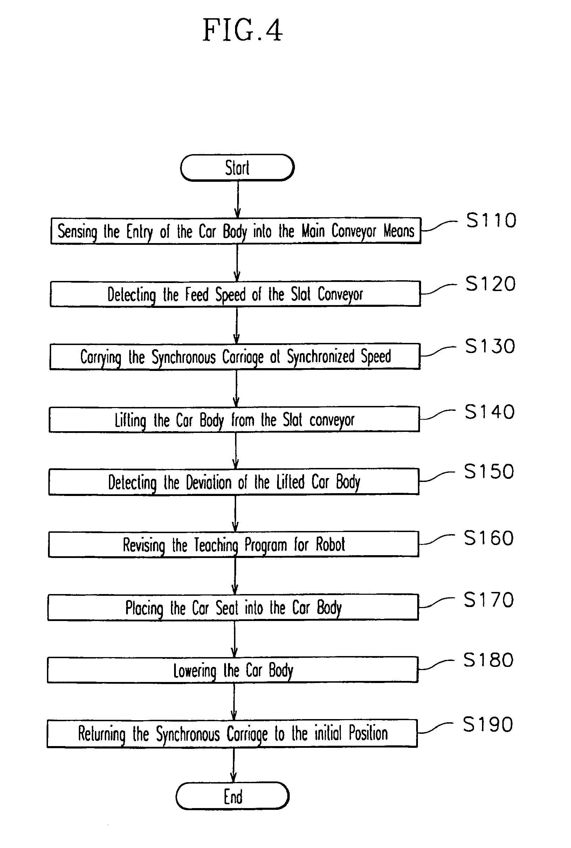

Fig.4 shows a car seat providing method using the robot system according to the present invention.

Initially, a seat conveyor 52 carries a car seat toward the position of the industrial robot 22 before the inventive robot system operates. When the car seat arrives in the front of the robot 22, the industrial robot 22 grips the car seat with the gripper 23, and then it waits for the signal to place the car seat.

In this initial state, a beam sensor 54 senses the entry of the car body onto the slat conveyor 12 of the main conveyor means 10 (S110). The beam sensors are installed in five positions. It is preferred to choose the five positions for sensing as the front tire, the rear tire, the bumper of the car body, the main conveyor return position, and the attachment sensing part of the surface of the slat conveyor. Simultaneously, the conveyor encoder 16 of the main conveyor means 10 detects the feed speed of the slat conveyor 12 (S120).

After the beam sensor 54 senses the entry of the car body, the servo motor 34 of the robot carrier 30 carries the synchronous carriage 32 at the speed which is synchronized with the feed speed of the main conveyor means by the servo motor controller 36 (S130). Simultaneously, the lifter 33 lifts the car body from the slat conveyor 12 (S140) in order to prevent perpendicular deviation of the car body.

The CCD camera 26 detects the horizontal deviation of the lifted car body and sends the deviation data to the robot controller 24(S150). It is preferred the CCD camera should start detecting the deviation about 2 or 3 minutes after the lifting because the car body may slightly vibrate right after the lifting.

Then, the teaching program in the robot controller 24 is revised by the deviation data sent from the vision controller 28 (S160). The robot controller 24 controlls the robot 22 to place the car seat into the car body according to the revised teaching program (S170).

When the robot 22 finishes placing the car seat, the lifter 33 lowers the car body(S180). Finally, the synchronous carriage 32 finishes carrying the robot 22 and rapidly returns to the initial waiting position (S190).

The robot system of the present invention can automate the car seat providing process in a car fitting-out yard and has flexibility against changes of the production methods by easy revision of the teaching program. It can also attain the effects of automation, such as a processing time reduction, and a quality improvement, etc.

In this disclosure, there is shown and described only the preferred embodiment of the invention, but, as aforementioned, it is to be understood that the invention is capable of use in various other combinations and environments and is capable of change and modifications within the scope of the inventive concepts as expressed herein.

## Claims

1. A robot system for synchronously operating in accordance with a conveyor speed comprising:
(a) a main conveyor means (10) for carrying a car body at a constant speed;
(b) a robot assembly (20), for placing a car seat into said car body, said robot assembly controlled by a robot controller (24) according to teaching programs;
(c) a robot carrier (30) for moving the working position of said robot assembly; and
(d) a main control unit (40) for detecting the feed speeds of said main conveyor means and said robot carrier, and synchronizing the feed speed of said robot carrier with the feed speed of said main conveyor means,
wherein said robot carrier further comprises a synchronous carriage (32), said synchronous carriage comprising a lifter (33) for separating said car body from said main conveyor means in order to prevent said car body from vibrating due to the speed transition of said conveyor during said robot assembly operation, and
wherein said robot assembly further comprises CCD cameras (26) for monitoring a sensing part of said car seat while being mounted on said robot carrier, and a vision controller (28) for sending the deviation data of said car seat, monitored from said CCD cameras (26), to said robot controller, said system being **characterized by**:
said deviation data of said car seat being operative to revise a teaching program to compensate for slight deviation of the position of the car seat;
said CCD cameras (26) being operative to monitor the position of the car body on said carriage (32) while said speed of said robot carrier (30) is synchronised with the feed speed of said conveyor means (10) and being operative to provide signals representative of the monitored car body to said vision controller (28);
said vision controller (28) being operative to send deviation data, of the car body, monitored from said CCD cameras(26) to said robot controller; and
said deviation data of the car body being operative further to modify said teaching program to compensate for slight deviations of the car body.

2. A car seat providing method using a robot system synchronized with a conveyor speed, comprising the steps of;
(a) sensing the entry of a car body and detecting the feed speed of a main conveyor means;
(b) carrying a synchronous carriage (32) at a speed which is synchronized with the feed speed of the main conveyor means (10);
(c) lifting the car body from the main conveyor means;
(d) sending deviation data of the lifted car body, which is monitored by CCD cameras (26), to the robot controller (24);
(e) placement of the car seat into the car body by robots;
(f) lowering the car body; and
(g) returning the synchronous carriages (32) to the initial position.
said method being **characterized by**:
employing said deviation data from said lifted car body to revise a teaching program to cause said robots to compensate for slight deviations of the car body;
employing a CCD camera (26)to monitor the car seat on the robot;
sending deviation data of the car seat to the robot controller; and
employing said deviation data from said car seat further to revise the teaching program to cause said robots to compensate for slight deviations of the car seat.

## Patentansprüche

1. Ein Robotersystem zum synchronen Betrieb in Übereinstimmung mit einer Transportbandgeschwindigkeit, umfassend:
(a) ein Haupt-Transportbandmittel (10) zum Befördern einer Karosserie bei einer konstanten Geschwindigkeit;
(b) ein Roboterbauteil (20) zum Platzieren eines Autositzes in die Karosserie, wobei das Roboterbauteil durch eine Robotersteuerung (24) gemäß einem Lernprogramm gesteuert wird;
(c) einen Roboterbeförderer (30) zum Bewegen der Arbeitsposition des Roboterbauteils; und
(d) eine Hauptsteuereinheit (40) zum Detektieren der Transportgeschwindigkeiten des Haupt-Transportbandmittels und des Roboterbeförderers, und zum Synchronisieren der Transportgeschwindigkeit des Roboterbeförderers mit der Transportgeschwindigkeit des Haupt-Transportbandmittels,
wobei der Roboterbeförderer zusätzlich einen synchronen Fahrwagen (32) umfasst, wobei der synchrone Fahrwagen einen Aufnehmer (33) umfasst zum Trennen der Karosserie vom Haupt-Transportbandmittel, um zu vermeiden, dass die Karosserie wegen des Geschwindigkeitübergangs des Transportbandes während des Roboterbauteil-Betriebs vibriert, und
wobei das Roboterbauteil zusätzlich CCD-Kameras (26) umfasst, zum Überwachen eines abtastenden Bestandteils des Autositzes, während der Autositz auf dem Roboterbeförderer montiert wird, sowie eine Sichtsteuerung (28) umfasst, zum Senden der Abweichdaten des Autositzes zur Robotersteuerung, überwacht von den CCD-Kameras (26), wobei das System **dadurch gekennzeichnet ist, dass**:
die Abweichdaten des Autositzes betriebsbereit sind zum Überprüfen eines Lernprogramms, um geringfügige Abweichung der Autositz-Position auszugleichen;
die CCD-Kameras (26) betriebsbereit sind zum Überwachen der Position der Karosserie auf dem Fahrwagen (32), während die Geschwindigkeit des Roboterbeförderers (30) mit der Transportgeschwindigkeit des Haupt-Transportbandmittels (10) synchronisiert ist und betriebsbereit sind zum Liefern von kennzeichnenden Signalen der überwachten Karosserie zur Sichtsteuerung (28);
die Sichtsteuerung (28) betriebsbereit ist zum Senden von Abweichdaten der Karosserie zur Robotersteuerung, die von den CCD-Kameras (26) überwacht werden; und
die Abweichdaten der Karosserie zusätzlich betriebsbereit sind zum Modifizieren des Lernprogramms, um geringfügige Abweichungen der Karosserie auszugleichen.

2. Ein Autositz-Lieferverfahren, das ein Robotersystem benutzt, welches mit einer Transportbandgeschwindigkeit synchronisiert ist, umfassend die Schritte:
(a) Abtasten des Eingangs einer Karosserie und Detektieren der Transportgeschwindigkeit eines Haupt-Transportbandmittels;
(b) Befördern eines synchronen Fahrwagens (32) bei einer Geschwindigkeit, die mit der Transportgeschwindigkeit des Haupt-Transportbandmittels (10) synchronisiert ist;
(c) Anheben der Karosserie vom Haupt-Transportbandmittel;
(d) Senden von Abweichdaten der angehobenen Karosserie, die durch CCD-Kameras (26) überwacht werden, zu der Robotersteuerung (24);
(e) Platzieren des Autositzes in die Karosserie durch Roboter;
(f) Herabsetzen der Karosserie; und
(g) Rückführen des synchronen Beförderers (32) in die Anfangsposition,
wobei das Verfahren **gekennzeichnet ist durch**:
Verwenden der Abweichdaten der angehobenen Karosserie zum Überprüfen eines Lernprogramms, um zu veranlassen, dass die Roboter geringfügige Abweichungen der Karosserie ausgleichen;
Verwenden einer CCD-Kamera (26) zum Überprüfen des Autositzes auf dem Roboter;
Senden von Abweichdaten des Autositzes zur Robotersteuerung; und
zusätzliches Verwenden der Abweichdaten des Autositzes zum Überprüfen des Lernprogramms, um zu veranlassen, dass die Roboter geringfügige Abweichungen des Autositzes ausgleichen.

## Revendications

1. Système de robot pour un fonctionnement synchrone selon une vitesse de convoyeur comprenant :
(a) un moyen de convoyeur principal (10) pour transporter un corps de véhicule à une vitesse constante ;
(b) un ensemble de robot (20), pour placer un siège de véhicule dans ledit corps de véhicule, ledit ensemble de robot commandé par un dispositif de commande de robot (24) selon des programmes d'apprentissage ;
(c) un transporteur de robot (30) pour déplacer la position de travail dudit ensemble de robot ; et
(d) une unité de commande principale (40) pour détecter les vitesses d'avance dudit moyen de convoyeur principal et dudit transporteur de robot, et synchronisation de la vitesse d'avance dudit transporteur de robot avec la vitesse d'avance dudit moyen de convoyeur principal,
dans lequel ledit transporteur de robot comprend en outre un chariot synchrone (32), ledit chariot synchrone comprenant un ascenseur (33) pour séparer ledit corps de véhicule dudit moyen de convoyeur principal afin d'empêcher ledit corps de véhicule de vibrer dû à la transition de vitesse dudit convoyeur pendant ladite opération d'ensemble de robot, et
dans lequel ledit ensemble de robot comprend en outre des caméras CCD (26) pour contrôler une partie de détection dudit siège de véhicule tout en étant montée sur ledit transporteur de robot, et un dispositif de commande de vision (28) pour envoyer les données de déviation dudit siège de véhicule, contrôlées par lesdites caméras CCD (26), audit dispositif de commande de robot, ledit système étant **caractérisé par** :
lesdites données de déviation dudit siège de véhicule étant fonctionnelles pour réviser un programme d'apprentissage pour compenser une légère déviation de la position du siège de véhicule ;
lesdites caméras CCD (26) étant fonctionnelles pour contrôler la position du corps de véhicule sur ledit chariot (32) alors que la vitesse dudit transporteur de robot (30) est synchronisée avec la vitesse d'avance dudit moyen de convoyeur (10) et étant fonctionnelle pour fournir des signaux représentatifs dudit corps de véhicule contrôlé audit dispositif de commande de vision (28) ;
ledit dispositif de commande de vision (28) étant fonctionnel pour envoyer des données de déviation du corps de véhicule, contrôlées par lesdites caméras CCD (26) audit dispositif de commande de robot ; et
lesdites données de déviation dudit corps de véhicule étant fonctionnelles en outre pour modifier ledit programme d'apprentissage pour compenser de légères déviations dudit corps de véhicule.

2. Procédé de fourniture d'un siège de véhicule utilisant un système de robot synchronisé avec une vitesse de convoyeur, comprenant les étapes de :
(a) détection de l'entrée du corps de véhicule et détection de la vitesse d'avance d'un moyen de convoyeur principal ;
(b) transport d'un chariot synchrone (32) à une vitesse qui est synchronisée avec la vitesse d'avance du moyen de convoyeur principal (10) ;
(c) élévation du corps de véhicule à partir du moyen de convoyeur principal ;
(d) envoi des données de déviation du corps de véhicule levé, qui est contrôlé par des caméras CCD (26), au dispositif de commande de robot (24) ;
(e) placement du siège de véhicule dans le corps de véhicule par des robots ;
(f) abaissement du corps de véhicule ; et
(g) retour des chariots synchrones (32) à la position initiale,
ledit procédé étant **caractérisé par** :
l'emploi desdites données de déviation à partir dudit corps levé pour réviser un programme d'apprentissage pour obliger lesdits robots à compenser des légères déviations du corps de robot ;
l'emploi d'une caméra CCD (26) pour contrôler le siège de véhicule sur le robot ;
l'envoi des données de déviation du siège de véhicule audit dispositif de commande de robot ; et
l'emploi desdites données de déviation par ledit siège de véhicule en outre pour réviser le programme d'apprentissage pour obliger lesdits robots à compenser de légères déviations du siège de véhicule.
